Europäisches Patentamt

European Patent Office

Office européen des brevets

(11) Publication number: **0 189 304**
A2

# EUROPEAN PATENT APPLICATION

(21) Application number: 86300378.6

(22) Date of filing: 20.01.86

(51) Int. Cl.⁴: **B 29 D 11/00**

(30) Priority: 21.01.85 GB 8501450

(71) Applicant: **BICC Public Limited Company, 21, Bloomsbury Street, London, WC1B 3QN (GB)**

(43) Date of publication of application: 30.07.86
Bulletin 86/31

(72) Inventor: **Salamon, Dennis Michael, 23, Gwydrin Road, Liverpool, L18 3HA (GB)**

(74) Representative: **Ross Gower, Edward Lewis et al, BICC plc Patents and Licensing Department 38 Ariel Way Wood Lane, London W12 7DX (GB)**

(84) Designated Contracting States: **DE FR IT NL SE**

(54) Optical cable manufacture.

(57) In a simple and inexpensive method of manufacturing an elongate core for use in an optical cable, a flexible reinforcing member 1 is caused to travel through an extrusion machine 2 and a circumferential wall of plastics material is extruded around the member. Downstream of the extrusion machine 2, a plurality of circumferentially spaced, longitudinally extending grooves, e.g. helically extending grooves, are formed in the soft outer surface of the plastics wall by deforming the plastics material in such a way that there is no wastage of plastics material. Deformation of the plastics wall is preferably effected by freely rotatable discs 4 whose axes of rotation extend transversely of the axis of the advancing plastics covered reinforcing member 1 and which are urged into and effect longitudinally continuous indentations or grooves in the plastics material of the wall. Preferably, optical fibres are fed into the grooves of the plastics covered reinforcing member 1 after the grooves have been formed.

Optical Cable Manufacture

This invention relates to optical cables for the transmission of the ultra-violet, visible and infra-red regions of the electromagnetic spectrum, which regions, for convenience, will hereinafter all be included in the generic term "light" and especially, but not exclusively, to optical cables for use in the communications field adapted for transmission of light having a wavelength within the range 0.8 to 2.1 micrometres.

The invention is particularly concerned with an optical cable of the kind comprising an elongate core consisting of a central flexible elongate reinforcing member and, surrounding the reinforcing member, an extruded elongate body of plastics material having in its outer circumferential surface a plurality of circumferentially spaced, longitudinally extending separate grooves in at least one of which is loosely housed at least one separate optical fibre and/or at least one optical bundle as hereinafter defined.

By the expression "optical bundle" is meant a group of optical fibres or a group of fibres including one or more optical fibres and one or more non-optical reinforcing fibres or other reinforcing elongate elements.

It is an object of the present invention to provide an improved method of manufacturing an elongate core for use in an optical cable of the aforesaid kind, which method is simple and inexpensive and, if desired, enables the optical cable to be manufactured in a single operation.

According to the invention the improved method comprises causing a flexible elongate reinforcing member to travel in the direction of its length through the extrusion orifice of an extrusion machine; extruding about the advancing reinforcing member a circumferential wall of plastics material having a substantially smooth outer circumferential surface; and, downstream of the extrusion machine, forming in said smooth outer circumferential surface of the plastics wall a plurality of circumferentially spaced, longitudinally extending grooves by deforming the plastics material in such a way that there is substantially no wastage of plastics material.

Preferably, deformation of the circumferential wall of plastics material is effected by causing the plastics covered reinforcing member to travel in the direction of its length through a head rotatably driven about the axis of the advancing plastics covered reinforcing member and carrying a plurality of freely rotatable discs each of whose axis of rotation extends

transversely of the axis of the advancing plastics covered reinforcing member and each of which is urged into and effects a longitudinally continuous indentation or groove in the plastics material of the circumferential wall. Each freely rotatable disc may be urged against the plastics material of the circumferential wall under a predetermined constant fluid pressure or it may be spring loaded. Where, as preferred, each of the circumferentially spaced, longitudinally extending grooves follows a helical path around the elongate core, the axes of rotation of the freely rotatable discs are all inclined at substantially the same acute angle to the axis of the advancing plastics covered reinforcing member.

Preferably, each freely rotatable disc is heated to such a temperature that, when the disc is urged into contact with the plastics material of the circumferential wall, it softens at least the outer circumferential portion of the plastics material to an extent sufficient for the rotating disc to deform and form a groove in the circumferential surface of the circumferential wall. For example, where the circumferential wall of the elongate core is of polyethylene, each disc will be heated to a temperature in the range 120 to 140°C. Alternatively, or additionally, the position downstream of the extrusion machine at which deformation of the plastics material of the circumferential wall is effected may be so spaced from the extrusion machine that at least the radially outer portion of the circumferential wall is still sufficiently soft for deformation to occur when the freely rotatable discs are urged into contact with the plastics material of the wall.

The rotatably driven head carrying the freely rotatable discs preferably is coupled to means drawing the plastics covered reinforcing member from the extrusion machine.

Preferably, downstream of the rotatably driven head carrying the freely rotatable discs, the grooved elongate core is caused to pass through at least one water trough to cool the plastics circumferential wall with the grooves formed therein.

Optical fibres and/or optical bundles may be fed into the grooves of the elongate core in a separate operation but, preferably, optical fibres and/or optical bundles are fed into the grooves in line with the grooving operation; additionally, one or more than one insulated or bare elongate electric conductor may be fed into at least one of the grooves at the same time as the optical fibres and/or optical bundles. Furthermore, if desired, sheathing of the elongate core and/or armouring of the sheathed elongate core to complete manufacture of the optical cable may be effected in line with the grooving and optical fibre/bundle feeding operations.

Where two or more optical fibres are to be fed into

5.                    0189304

the same groove of the elongate core, the optical fibres may be component parts of an optical fibre ribbon which is fed into the groove.

Optical fibres and/or optical bundles may be fed into the grooves of the elongate core in any known manner but, preferably, the grooved elongate core is caused to pass through a body which is mounted for rotation about the axis of the advancing elongate core and which has means directing optical fibres and/or optical bundles from freely rotatable supply reels into the grooves and means engaging in at least one of the grooves to form a screw-thread form of coupling between the core and the body, whereby the body is rotably driven by the advancing core. Where directing of optical fibres and/or optical bundles into the grooved elongate core is effected in line with the grooving operation, the means carried by the rotating body engaging in at least one of the grooves of the core to couple the body to the advancing core can be omitted as the rotating head carrying the freely rotating discs and the rotating body carrying means for directing optical fibres and/or optical bundles into the grooves of the elongate core preferably are geared together.

In a preferred embodiment, the rotating body carrying means directing optical fibres and/or optical bundles into the grooves in the circumferential plastics wall of the elongate core is in the form of a tube through which the grooved elongate core passes and which

6.  0189304

has, in its outer circumferential surface, a number of helically extending grooves into which optical fibres and/or optical bundles from freely rotatable supply reels are fed. The tube is of such a length, the helical grooves in the outer surface of the tube make such a number of turns and the tube is rotating at such a speed that the optical fibres and/or optical bundles are pulled off the freely rotating supply reels and travel forward at substantially the same linear speed as the grooved elongate core but on a greater pitch circle diameter. The difference between the pitch circle diameter of the optical fibres and/or optical bundles on the rotating tube and the pitch circle diameter of the axes of the grooves in the circumferential plastics wall of the elongate core is such that a predetermined excess length of optical fibre and/or optical bundle is fed into each groove of the elongate core.

To reduce the risk of an undesirable additional twist being introduced into the or each optical fibre and/or optical bundle as it is fed into the helically extending grooves, preferably the freely rotatable supply reels are carried on a head which is in axial alignment with and is rotatably driven about the axis of the rotating tube or other rotating body.

Immediately downstream of the rotating tube or other rotating body directing optical fibres and/or optical bundles into the grooves of the elongate core, preferably the grooved core with the optical fibres and/or optical bundles housed in the grooves passes through a head which is rotatably driven about the axis of the core and which helically laps a tape or thread about the core to hold the optical fibres and/or optical bundles in the grooves.

Preferably, at the downstream end of the rotating tube or other rotating body directing optical fibres and/or optical bundles into the grooves of the elongate core and immediately upstream of the taping head, the elongate core passes through a die which forces the optical fibres and/or optical bundles downwardly into the grooves and holds them there until the tape or thread has been helically lapped about the core.

Where it is required for the grooves of the elongate core to be substantially filled throughout their length with a greasy water-impermeable medium, preferably this is introduced through apertures in the die at the downstream end of the rotating tube into the grooves and assists in holding the optical fibres and/or optical bundles in the grooves until the helically lapped tape or thread has been applied.

The invention also includes apparatus for use in the improved method of manufacturing an elongate core as hereinbefore described.

The improved method of the present invention has the very important advantage that there is substantially no wastage of plastics material of the circumferential wall of the elongate core and, consequently, no necessity to provide means for collecting the waste plastics material. Furthermore, extrusion of the circumferential plastics wall on to the reinforcing member is a simple operation and requires no special rotatably driven die for forming the helical grooves in the circumferential plastics wall as it is extruded. The rotating head with freely rotating discs preferably employed to deform the circumferential plastics wall in such a way as to form longitudinally extending grooves is independent of the extrusion machine and can be readily retracted and/or serviced as required.

In order that the invention can be more fully understood and readily put into practice, a description will now be given, by way of example, of the preferred method of manufacturing an elongate core for use in an optical cable with reference to the accompanying diagrammatic drawing which shows a schematic representation of the apparatus employed.

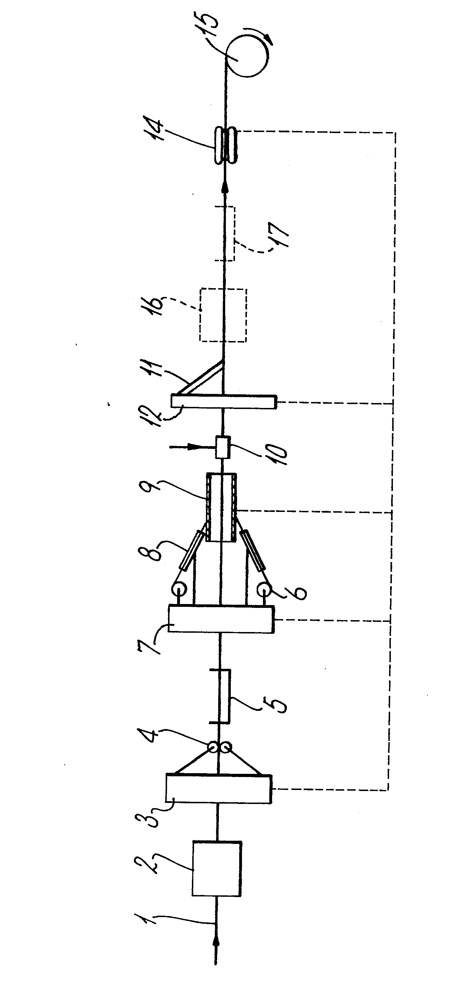

Referring to the drawing, a flexible elongate non-metallic reinforcing member 1 is drawn in the direction of its length by a pair of driven endless belts 14 through an extrusion machine 2 where a circumferential wall of plastics material having a substantially smooth outer circumferential surface is extruded about the advancing reinforcing member. On emerging from the extrusion orifice of the extrusion

0189304

machine 2, the advancing plastics covered reinforcing member 1 is drawn through a head 3 which is rotatably driven about the axis of the advancing reinforcing member and which carries a plurality of freely rotatable heated discs 4 whose axes of rotation are all inclined at substantially the same acute angle to the axis of the advancing reinforcing member and which are urged radially inwardly by associated spring means (not shown). The rotatably driven head 3 is so spaced from the extrusion machine 2 that a radially outer portion of the circumferential wall is still soft and the discs 4 are heated to such a temperature that, when the discs are urged into contact with the plastics material of the circumferential wall, an outer circumferential portion of the plastics material is sufficiently soft for the discs to effect circumferentially spaced, helically extending indentations or grooves in the plastics material of the circumferential wall with substantially no wastage of plastics material. Downstream of the rotatably driven head 3, the helically grooved plastics covered reinforcing member 1 travels through a water trough 5 which cools the plastics circumferential wall with the helical grooves formed therein to form an elongate core.

On emerging from the water trough 5, the helically grooved elongate core passes through a head 7 which is rotatably driven about the axis of the advancing elongate core and which carries a plurality of freely rotatable supply reels 6 of optical fibre F and through a tube 9 which has, in its outer circumferential surface, a number of helically extending grooves (not shown). Optical fibres F from the freely rotatable supply reels 6 are fed through guide means 8 into the helically extending grooves in the outer circumferential surface of the tube 9, the tube being of such a length, the helical grooves in the outer surface of the tube making such a number of turns and the tube being rotatably driven about the axis of the advancing elongate core at such a speed that the optical fibres are pulled off the freely rotating supply reels and travel forward at substantially the same linear speed as the helically grooved elongate core but on a greater pitch circle diameter. Downstream of the rotatably driven tube 9, the optical fibres F are directed into the helical grooves of the elongate core and the elongate core, with optical fibres housed in its grooves, passes through a die 10 which forces the optical fibres downwardly into the grooves and through apertures in which a greasy water-impermeable medium is introduced into the grooves, the greasy medium assisting in holding the optical fibres in the grooves. The difference between the pitch circle diameter of the optical fibres F in the helical groov es of the rotating tube 9 and the pitch circle diameter of the axes of the helical grooves in the circumferential plastics wall of the elongate core 1 is such that a predetermined excess length of optical fibre is fed into each groove of the elongate core.

Downstream of the die 10, the elongate core 1 with optical fibres F and greasy water-impermeable medium in its grooves, passes through the axis of a head 12 which is rotatably driven about the axis of the advancing elongate core and which helically laps a tape 11 about the grooved core to hold the optical fibres in the grooves. On emerging from between the pair of rotatably driven endless belts 14, the elongate core is wound around a take-up drum 15.

The head 3 carrying the freely rotatable discs 4, the head 7 carrying the freely rotatable supply reels 6, the tube 9 from which optical fibres F are directed into the helical grooves of the core 1, the head 12 which helically laps a tape 11 about the grooved core, and the pair of rotatably driven endless belts 14 are so operatively coupled together that each is rotatably driven at the required speed having regard to the linear speed of the elongate core.

If desired, downstream of the rotatably driven head 12 which helically laps a tape 11 about the grooved elongate core 1, the taped elongate core may pass through an extrusion machine 16 which extrudes a sheath of plastics material around the taped core and, on emerging from this extrusion machine, may pass through a water trough 17 for cooling the sheath before the sheathed core passes between the pair of rotatably driven endless belts 14.

0189304

CLAIMS

1. A method of manufacturing an elongate core for use in an optical cable, which method comprises causing a flexible elongate reinforcing member to travel in the direction of its length through the extrusion orifice of an extrusion machine, and extruding about the advancing reinforcing member a circumferential wall of plastics material having a substantially smooth outer circumferential surface, characterised in that, downstream of the extrusion machine, a plurality of circumferentially spaced, longitudinally extending grooves is formed in said smooth outer circumferential surface of the plastics wall by deforming the plastics material in such a way that there is substantially no wastage of plastics material.

2. A method as claimed in Claim 1, characterised in that the plurality of circumferentially spaced, longitudinally extending grooves is formed by causing the plastics covered reinforcing member to travel through a head rotatably driven about the axis of the advancing plastics covered reinforcing member and carrying a plurality of freely rotatable discs each of whose axes of rotation extends transversely of the axis of the advancing plastics covered reinforcing member and each of which is urged into and effects a longitudinally continuous groove in the plastics material of the circumferential wall.

3. A method as claimed in Claim 2, characterised in that the axes of rotation of the freely rotatable discs are all inclined at substantially the same acute angle to the axis of the advancing plastics covered reinforcing member to form therein a plurality of circumferentially spaced helically extending grooves.

4.    A method as claimed in Claim 2 or 3, characterised in that each freely rotatable disc is urged against the plastics material of the circumferential wall under a predetermined constant fluid pressure.

5.    A method as claimed in Claim 2 or 3, characterised in that each freely rotatably disc is spring loaded.

6.    A method as claimed in any one of Claims 2 to 5, characterised in that the position downstream of the extrusion machine at which deformation of the plastics material of the circumferential wall is effected is so spaced from the extrusion machine that at least the radially outer portion of the circumferential wall is still sufficiently soft for deformation to occur when the freely rotatable discs are urged into contact with the plastics material of the wall.

7.    A method as claimed in any one of Claims 2 to 6, characterised in that each freely rotatable disc is heated to such a temperature that, when the disc is urged into contact with the plastics material of the circumferential wall, it softens at least the outer circumferential portion of the plastics material to an extent sufficient for the rotating disc to deform and form a groove in the circumferential surface of the circumferential wall.

8. A method as claimed in any one of Claims 2 to 7, characterised in that the rotatably driven head carrying the freely rotatable discs is coupled to means drawing the plastics covered reinforcing member from the extrusion machine.

9. A method as claimed in any one of Claims 2 to 8, characterised in that, downstream of the rotatably driven head carrying the freely rotatable discs, the grooved elongate core is caused to pass through at least one water trough to cool the plastics circumferential wall with the grooves formed therein.

10. A method as claimed in any one of the preceding Claims, characterised in that optical fibres and/or optical bundles are fed into the grooves in line with the grooving operation.

11. A method as claimed in Claim 10, characterised in that sheathing of the elongate core and/or armouring of the sheathed elongate core to complete manufacture of the optical cable is or are effected in line with the grooving and optical fibre/bundle feeding operations.

12. A method as claimed in Claim 10 or 11, characterised in that the grooved elongate core is caused to pass through a tube which is rotatably driven about its axis and which has, in its outer circumferential surface, a number of helically extending grooves into which optical fibres and/or optical bundles from freely rotatable supply reels are fed, the tube being of such a length, the helical grooves in the outer surface of the tube making such a number of turns and the tube rotating at such a speed that the optical fibres and/or optical bundles are pulled off the freely rotating supply reels and travel forward at substantially the same linear speed as the grooved elongate core but on a greater pitch circle diameter, the difference between the pitch circle diameter of the optical fibres and/or optical bundles on the rotating tube and the pitch circle diameter of the axes of the grooves in the circumferential plastics wall of the elongate core being such that a predetermined excess length of optical fibre and/or optical bundle is fed into each groove of the elongate core.